# EUROPÄISCHE PATENTSCHRIFT

(11) **EP 4 344 919 B1**
(45) Veröffentlichungstag und Bekanntmachung des Hinweises auf die Patenterteilung: **11.11.2026**
(21) Anmeldenummer: 23195924.8
(22) Anmeldetag: 07.09.2023
(51) Int. Cl.: B60K 1/04, B60K 1/00, B60K 11/02, B60L 50/60, B60L 58/20, B60L 58/21, B62D 49/00, B64F 1/225

(54) **BATTERIE-ELEKTRISCHER SCHLEPPER SOWIE BAUKASTEN FÜR SEINE ERSTELLUNG**
ELECTRIC BATTERY TRACTOR AND MODULAR CONSTRUCTION KIT FOR THE CONSTRUCTION THEREOF
TRACTEUR ÉLECTRIQUE À BATTERIE ET KIT DE CONSTRUCTION POUR SA RÉALISATION

(30) Priorität: 08.09.2022 DE 202022105090 U
(43) Veröffentlichungstag der Anmeldung: 03.04.2024
(73) Patentinhaber: MULAG FAHRZEUGWERK Heinz Wössner GmbH & CO. KG, 77728 Oppenau (DE)
(72) Erfinder: Wössner, Holger, 77704 Oberkirch (DE)
(74) Vertreter: Weickmann & Weickmann PartmbB

(56) Entgegenhaltungen:
- EP-A1- 2 581 249
- CN-A- 107 039 616
- CN-A- 114 394 166
- CN-U- 202 138 210
- CN-U- 205 059 180
- DE-A1- 102007 044 526
- US-A1- 2018 254 443
- US-B1- 11 124 076

## Beschreibung

### I. Anwendungsgebiet

Die Erfindung betrifft Schlepper, wie sie beispielsweise auf dem Vorfeld eines Flughafens oder im Industrie- und Logistikbereich zum Ziehen von Anhängern und anderen Lasten eingesetzt werden.

Solche Schlepper besitzen meist eine Breite, deutlich geringer ist als die Breite von üblichen Straßenfahrzeugen, sodass die Fahrerkabine sich in der Regel über die gesamte Breite des Chassis erstreckt.

Dabei wird unterschieden zwischen sogenannten Langhaubern, die einen Chassis-Vorderteil - in dem bei Betrieb mit Verbrennungsmotoren der Motor untergebracht ist - mit einer Fronthaube vor der Frontscheibe der Fahrerkabine besitzen, und Frontlenkern, bei denen sich die Frontscheibe der Fahrerkabine fast unmittelbar am vorderen Ende des Chassis befindet, also ohne Chassis-Vorderteil davor, wobei sich - bei Betrieb mit Verbrennungsmotor - dieser hinter der Fahrerkabine im Längen-Bereich der nach hinten anschließenden Ladefläche befindet.

### II. Technischer Hintergrund

Solche Schlepper werden von den Herstellern nicht nur in diesen beiden grundsätzlich unterschiedlichen Bauarten, sondern innerhalb jeder Bauart in unterschiedlich großen Bauformen hinsichtlich Achsabstand, Spurbreite und Motorleistung angeboten, wofür die Hersteller unterschiedlich große Chassis vorhalten müssen.

Um solche Schlepper mit einem Batterie-elektrischem Antrieb - bei dem der Fahr-Motor also ein Elektromotor ist und ausschließlich von der Traktions-Batterie mit Energie versorgt wird - anbieten zu können, müssen vor allem die heute noch sehr voluminösen und schweren Batterien in geeigneter Weise im Fahrzeug untergebracht werden, wobei die Batterien in der Regel in Form von Quader-förmigen Batterie-Modulen von Modul-Herstellern zugekauft werden, deren Abmessungen vom Hersteller der Schlepper aufgrund der geringen Stückzahlen so hingenommen werden müssen, wie sie vom Batterie-Hersteller angeboten werden.

Die benötigte oder gewünschte Anzahl von Batterie-Modulen soll im Chassis des Schleppers, wie es bereits für die Antriebe mit Verbrennungsmotor existiert, untergebracht werden, möglichst mit einer guten Gewichtsverteilung und einem niedrigen Schwerpunkt, ohne Kühlung, Wartung und Einbau/Austausch der Batterien zu behindern.

Die DE 10 2007 044526 A1 und CN 114 394 166 A offenbaren zwei verschiedene batterieelektrische Schleppervarianten.

### III. Darstellung der Erfindung

### a) Technische Aufgabe

Es ist daher die Aufgabe gemäß der Erfindung, eine Anordnung der Batterie-Module im Chassis des Schleppers zur Verfügung zu stellen, die abhängig von der vorgesehenen Anzahl an Batterie-Modulen und den durch das gewählte Chassis vorgegebenen Randbedingungen diese Kriterien optimal erfüllt.

Es ist ferner die Aufgabe gemäß der Erfindung, einen Baukasten zum Erstellen der Schlepper in unterschiedlichen Bauformen bereitzustellen und auch Bauarten aus möglichst wenigen Baukasten-Teilen zu ermöglichen.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Ein gattungsgemäßer, Batterie-elektrischer Schlepper weist typischerweise ein Chassis auf, an dem zwei Achsen - eine Vorderachse und eine Hinterachse - mit den entsprechenden Rädern daran montiert sind sowie für den Fahr-Antrieb einen elektrischen Fahr-Motor und wenigstens zwei Batterie-Module, die der Energieversorgung dieses elektrischen Fahr-Motors dienen.

Eine solche Achse kann auch eine Doppelachse mit in kurzem Abstand hintereinander angeordneten einzelnen Achsen sein.

Unter einem Batterie-Modul wird ein aus einer Vielzahl von Batterie-Zellen zusammengesetztes und mit einer Einhaltung versehenes Modul verstanden, welches einheitlich gehandhabt werden kann und am Markt von Batterie-Herstellern angeboten wird. Üblicherweise ist ein solches Batterie-Modul flach quaderförmig, besitzt also eine Länge, eine Breite und eine Dicke, wobei die Länge vorzugsweise größer ist als die Breite und die Breite vorzugsweise größer ist als die Dicke, und wobei die Breite meist mindestens der doppelten Dicke und die Länge meist mindestens der dreifachen oder gar vierfachen Dicke entspricht.

Ein typisches solches Batterie-Modul ist etwa 1 m lang und wiegt ca. 300 kg.

Hinsichtlich eines solchen gattungsgemäßen Schleppers wird diese Aufgabe erfindungsgemäß dadurch gelöst, dass wenigstens ein Batterie-Modul - beispielsweise in der Aufsicht betrachtet - hinter der Hinterachs-Position angeordnet ist, vorzugsweise vollständig hinter der Hinterachs-Position angeordnet ist, während ein anderes Batterie-Modul - beispielsweise in der Aufsicht betrachtet - vor der Hinterachs-Position angeordnet ist, vorzugsweise vollständig vor der Hinterachs-Position angeordnet ist.

Vorzugsweise ist das hinter der Hinterachse angeordnete Batterie-Modul hochkant liegend oder hochkant stehend und mit seiner Länge oder Breite in Querrichtung des Schleppers verlaufend, jedenfalls mit seiner Dicken-Richtung in Längsrichtung des Schleppers verlaufend, im Chassis angeordnet. Dadurch wird nur ein sehr kurzer Überstand des Chassis über die Hinterachse nach hinten benötigt.

Dies wird unter anderem dadurch möglich, dass der elektrische Fahr-Motor über der Hinterachs-Position der angetriebenen Hinterachse, insbesondere dem Hinterachse-Körper angeordnet ist, also insbesondere maximal 10 cm, besser maximal nur 5 cm, besser überhaupt nicht in der Aufsicht betrachtet nach hinten über den Hinterachs-Körper vorstehend.

Dadurch verbleibt zwischen der Hinterachse-Baugruppe und dem hinteren Ende des Chassis noch ausreichend Raum für die Hochkant-Unterbringung des hinteren Batterie-Moduls.

Auch eine meist vorhandene, untersetzende Wirkverbindung, in der Regel eine Stirnrad-Verbindung über Zahnräder, zwischen der in der Regel in Längsrichtung des Schleppers weisende Motor-Abtriebswelle und der angetriebenen Hinterachse, insbesondere dem darin angeordneten Differential, in Fahrtrichtung ist vor dem Rest der Hinterachse, insbesondere des Hinterachs-Körpers, angeordnet.

Dadurch benötigt auch diese Wirkverbindung keinen Raum zwischen der Hinterachs-Position und dem hinteren Ende des Chassis.

Aus dem gleichen Grund ist vorzugsweise auch der Wechselrichter innerhalb des Achsabstandes in dessen hinterer Hälfte angeordnet, zumal die elektrischen Leitungen für den Wechselstrom vom Wechselrichter zum Fahr-Motor dadurch sehr kurz gehalten werden können, was elektrische Verluste minimiert. Innerhalb des Achsabstandes können auch die elektrische Sicherungseinheit und das Ladegerät untergebracht werden, vorzugsweise jeweils möglichst tief liegend.

Die dadurch größere Länge der Gleichstrom-Leitungen von den Batterie-Modulen zum Wechselrichter wirken sich dagegen nicht negativ aus.

Dadurch ergibt sich einerseits eine gute Gewichtsverteilung, andererseits eine gute Raumausnutzung innerhalb des Chassis.

Unter einer Achs-Position, etwa der Hinterachs-Position, wird diejenige Position in Längsrichtung, der Geradeaus-Fahrtrichtung, des Schleppers verstanden, an der sich - in Aufsicht oder Seitenansicht betrachtet - die gemeinsame Rotationsachse, also die gemeinsame Radachse der in Geradeaus-Fahrtstellung stehenden Räder dieser Achse befindet.

Unter einer hochkant angeordneten Batterie wird bei einer quaderförmigen Batterie, insbesondere einer flach quaderförmigen Batterie, verstanden, dass die Batterie auf einer ihrer Schmalseiten steht oder liegt.

Unter hochkant liegend wird verstanden, dass eine solche Batterie auf ihrer längsten Schmalseite liegt, unter hochkant stehend wird verstanden, dass eine solche Batterie auf ihrer kürzesten Schmalseite steht.

Diese und die nachfolgenden Ausführungen gelten insbesondere für einen Schlepper in der Bauform eines Langhaubers.

Erfindungsgemäß erstreckt sich dabei das wenigstens eine vordere Batterie-Modul in Längsrichtung über die Vorderachs-Position hinweg.

Dabei befindet sich dieses über die Achs-Position hinweg erstreckende Batterie-Modul bevorzugt zu mindestens 40 %, besser mindestens 50 %, besser mindestens 60 % seiner Erstreckung in der Aufsicht betrachtet in Längsrichtung in dem Bereich zwischen den Achs-Positionen, also innerhalb des sogenannten Achsabstandes.

Der Rest der Erstreckung dieses wenigstens einen vorderen Batterie-Moduls befindet sich außerhalb des Achsabstandes, vorzugsweise bei hinweg erstrecken über die Vorderachs-Position vor der Vorderachs-Position des Batterie-Moduls.

Dies ergibt eine gute Gewichtsverteilung und ermöglicht dennoch den Einbau der oben beschriebenen Batterie-Module in ein Chassis, wie es bisher bereits für einen Antrieb mittels Verbrennungsmotoren existiert hat, sodass sehr ähnliche Chassis für beide Antriebsarten verwendet werden können.

Dabei befindet sich dieses vordere, sich über die Achs-Position hinweg erstreckende Batterie-Modul vorzugsweise in einer Höhe oberhalb der Rotationsachse oder der Nabenhöhe der entsprechenden Achse, insbesondere oberhalb eines in Querrichtung vom linken Rad zum rechten Rad durchgehenden oder gekröpften Achskörpers.

Dies ermöglicht die Verwendung von Achsen mit einem in Querrichtung durchgehenden oder gekröpften Achskörper, sodass eine aufwändigere Einzelrad-Aufhängung vermieden werden kann.

Wenn sich dieses vordere Batterie-Modul, insbesondere wenn es sich über die Achs-Position hinweg erstreckt, sogar oberhalb der Radhöhe, also der Oberkante der Räder dieser Achse, in deren Nähe sich das Batterie-Modul befindet, angeordnet ist, sodass es sich, insbesondere bei eingeschlagenen Rädern in Querrichtung über das Rad hinweg erstrecken kann, so kann dadurch die Breite des Chassis besonders gut ausgenutzt werden.

Dadurch kann auch bei Schleppern mit einer sehr geringen Spurbreite das Batterie-Modul flachliegend und mit seiner Länge in Querrichtung zum Schlepper eingebaut werden, sodass auch bei kleinen Schleppern ausreichend viele Batterie-Module untergebracht werden können.

Vorzugsweise ist jedoch ein sich über die Vorderachs-Position hinweg erstreckendes vorderes Batterie-Modul mit seiner Batterie-Längsrichtung in Schlepper-Längsrichtung eingebaut oder unter nur geringer Abweichung hiervon von maximal 30°, besser maximal 20°, besser maximal 10°positioniert.

Dies ermöglicht auch in schmalen Schleppern die Unterbringung solcher Batterie-Module, zumindest in Längsrichtung hochkant liegend, oder auch in Längsrichtung flach liegend.

Bei ausreichender Breite des Chassis kann es jedoch auch mit seiner Batterie-Längsrichtung in Querrichtung des Schleppers angeordnet sein.

Wenn wenigstens zwei vordere Batterie-Module, also vor der Vorderachs-Position liegende Batterie-Module, vorhanden sind, werden diese vorzugsweise parallel verlaufend und mit ihrer Längsrichtung in Längsrichtung des Schleppers eingebaut, vorzugsweise flach liegend - wenn die im Chassis zur Verfügung stehende Breite hierfür ausreicht - oder hochkant, aber vorzugsweise hochkant liegend.

Um den Schwerpunkt des Schleppers möglichst niedrig zu halten, ist es vorteilhaft, wenn sich diese insbesondere mehreren vorderen Batterie-Module nach unten bis unter die Nabenhöhe erstrecken, was jedoch nur bei gekröpften Achsen oder bei Einzelrad-Aufhängung möglich ist.

Bei der einfacheren und meist verwendeten Bauform einer Achse mit quer durchgehendem Achskörper können sich das eine oder die mehreren Batteriemodule nur oberhalb davon befinden.

Wenn die Breite innerhalb des Chassis ausreicht, ergibt dann die flachliegende Anordnung der beiden Batterie-Module übereinander - aus Gründen der Kühlung mit Abstand dazwischen - meist die niedrigere Schwerpunktlage der Batterie-Module in Summe, zusätzlich sind bei den gängigen Bauformen für eine optimale Kühlung übereinander flach liegende Batterie-Module günstiger.

Zwei vordere Batterie-Module können jedoch auch in Längsrichtung des Schleppers hintereinander, gegebenenfalls teilweise in Längsrichtung des Schleppers überlappend, angeordnet werden, was je nach Abmessungen des Chassis sogar die Unterbringung eines dritten vorderen Batterie-Moduls ermöglicht:
Eine Möglichkeit besteht darin, mindestens zwei vordere Batterie-Module jeweils flach liegend in Längsrichtung hintereinander anzuordnen, davon vorzugsweise das weiter hinten befindliche der beiden mit der Batterie-Länge in Querrichtung und vorzugsweise das mindestens eine - oder 2 übereinander - weiter vorn befindliche der beiden mit der Batterie-Länge in Längsrichtung des Schleppers.

Alternativ hierzu kann das weiter hinten befindliche der mindestens zwei vorderen Batterie-Module hochkant liegend in Querrichtung, möglichst knapp vor der Fahrerkabine, eingebaut werden. Davor kann ein weiteres vorderes Batterie-Modul - je nach Abmessungen des Chassis - flach liegend mit Batterielänge in Längsrichtung oder in Querrichtung angeordnet werden, oder insbesondere bei Anordnung in Längsrichtung sogar zwei übereinander oder hochkant liegend nebeneinander.

In der Regel befinden sich die Anschlüsse, also insbesondere die elektrischen Anschlüsse, des Batterie-Moduls in dessen kürzester Seite, bei einem quaderförmigen Batterie-Modul in dessen kurzer Schmalseite.

Bei über die Vorderachs-Position hinweg eingebauten Batterie-Module werden diese bevorzugt mit den Anschlüssen nach vorne eingebaut, wenn die Batterien in Längsrichtung montiert sind, ansonsten mit den Anschlüssen zur Seite weisend. Bei einem hochkant stehenden Batterie-Modul wird dieses bevorzugt mit den Anschlüssen nach oben weisend montiert.

Die, insbesondere vorderen, Batterie-Module werden mittels eines Modul-Halters am Chassis befestigt, der insbesondere U-förmig oder L-förmig ausgebildet ist, wobei der Abstand zwischen den frei endenden Schenkel der U-Form so bemessen ist, dass er das Batterie-Modul dazwischen aufnehmen kann.

Entweder sind für hochkant stehende oder flachliegende Batterie-Module - in der Regel werden innerhalb des Schleppers nur identische Batterie-Module verbaut - unterschiedliche Modul-Halter vorhanden und/oder der Abstand zwischen den frei endenden Schenkel der U-Form kann verstellt werden.

Da ein solcher Modul-Halter je nach Bauform und Größe des Chassis an unterschiedlichen Stellen befestigt werden muss, weist der Modul-Halter vorzugsweise auch unterschiedliche Befestigungsvorrichtungen, beispielsweise Verschraubung-Bohrungen, auf zum Befestigen an unterschiedlichen Stellen und/oder an unterschiedlichen Chassis, zum Beispiel in einem entsprechenden Lochmuster, welches Befestigungsbohrungen für unterschiedliche Chassis aufweist.

Auch für die Frontlenker-Bauform eines Schleppers ist diese Anordnung der Batterie-Module vorteilhaft:
Da sich meist eine Ladefläche auf etwa halber Höhe des Schleppers von der Fahrerkabine aus nach hinten erstreckt, kann auch bei einem solchen Schlepper hinter der Hinterachs-Position ein Batterie-Modul untergebracht werden, bevorzugt wiederum hochkant, vorzugsweise hochkant liegend, da eine hochkant stehende Unterbringung unterhalb des Niveaus der Ladefläche in der Regel nicht möglich ist.

Mindestens ein vorderes Batterie-Modul kann dann vor der Hinterachs-Position angeordnet werden, sei es im Achsabstand zwischen den Achsen oder auch teilweise über die Vorderachse nach vorne ragend, etwa unter die Fahrerkabine teilweise hineinragend, dann vorzugsweise in flach liegender Anordnung.

In einer weiteren Ausführungsform der Erfindung kann vorgesehen sein, dass die Anschlüsse (6), insbesondere die elektrischen Anschlüsse (6), des Batterie-Moduls (5) in dessen kürzester Seite angeordnet sind oder bei einem quaderförmigen Batterie-Modul (5) in dessen kurzer Schmalseite.

In einer weiteren Ausführungsform der Erfindung kann das Batterie-Modul (5) über eine Flüssigkeit-Kühlung verfügen, wobei das wenigstens eine vordere Batterie-Modul (5.2) mit den Flüssigkeits-Anschlüssen nach vorne weisend angeordnet und mit einem vor dem wenigstens einen Batterie-Modul (5.2) im Chassis (2) angeordneten Flüssigkeits-Kühler verbunden sein kann.

In einer weiteren Ausführungsform der Erfindung kann vorgesehen sein, dass die Batterie-Module (5) mittels eines Modul-Halters (7.1, 7.2) am Chassis (2) befestigt sind, oder/und der Modul-Halter (7.1, 7.2) unterschiedliche Befestigungsvorrichtungen, beispielsweise Verschraubungs-Bohrungen, aufweist, zum Befestigen an unterschiedlichen Stellen im Chassis (2) und/oder an unterschiedlichen Bauteilen des Chassis.

In einer weiteren Ausführungsform der Erfindung kann vorgesehen sein, dass entweder der Modul-Halter (7.1, 7.2) U-förmig oder L-förmig ausgebildet ist, wobei insbesondere der Abstand zwischen den frei endenden Schenkeln der U-Form veränderbar ist oder der Modul-Halter (7.1, 7.2) winkelförmig ausgebildet ist, wobei insbesondere der im Montagezustand untere, horizontal verlaufende Schenkel Befestigungsvorrichtungen zum Befestigen gegenüber dem Chassis (2) aufweist, oder/und wobei insbesondere der Modul-Halter (7.1, 7.2) U-förmig ausgebildet ist, wobei der Abstand zwischen den frei endenden Schenkeln der U-Form so dimensioniert ist, dass ein Batterie-Modul, besser zwei Batterie-Module, dazwischen passen.

In einer weiteren Ausführungsform der Erfindung kann vorgesehen sein, dass das hintere Batterie-Modul (5.1) primär stehend am Chassis (2) befestigt ist, insbesondere der Modul-Halter (7.1) sich horizontal entlang der Oberseite des Batterie-Modul (5.1) erstreckt.

Wenn Produkte wie etwa Schlepper in ähnlichen Bauformen, beispielsweise grundsätzlich gleicher Gestaltung aber unterschiedlichen Abmessungen, in größerer Anzahl hergestellt werden müssen, kann hierfür ein Baukasten verwendet werden, in dem einzelne Teile oder Baugruppen des Schleppers in unterschiedlichen Varianten als Baukastenteile vorgehalten werden, wodurch sich aus relativ wenigen verschiedenen Baukastenteilen eine große Vielfalt an unterschiedlich gestalteten Schleppern herstellen lässt, was den Aufwand für Lagerhaltung und Logistik in Grenzen hält.

Erfindungsgemäß wird hinsichtlich des Baukastens diese Aufgabe dadurch gelöst, dass ein Baukasten als Baukastenteile umfasst
- wenigstens eine Sorte von Batterie-Modulen,
- wenigstens eine Sorte von Modul-Haltern,
- wenigstens eine Sorte von Fahr-Motoren.

Zusammen mit unterschiedlichen Chassis oder Chassis-Baugruppen können hieraus bereits sehr viele verschiedene Varianten eines Batterie-elektrischen Schleppers hergestellt werden.

Vorzugsweise umfasst der Baukasten als Baukastenteile nicht nur eine sondern zwei Sorten von Modul-Haltern, nämlich
- eine Sorte von Modul-Haltern zum Befestigen eines Batteriemoduls nur flach liegend am Chassis,
- eine Sorte von Modul-Haltern zum Befestigen eines Batteriemoduls nur aufrecht, insbesondere aufrecht liegend, am Chassis.

Dadurch können die Batteriemodule in unterschiedlichen Einbaulagen montiert werden.

Vorzugsweise umfasst der Baukasten als Baukastenteile
- mehrere Sorten von Fahr-Motoren, die sich insbesondere hinsichtlich ihrer Dauerleistung unterscheiden,
   und/oder
- mehrere Sorten von Vorderachsen und/oder Hinterachsen, die sich insbesondere hinsichtlich ihres Radabstandes, also der Spurbreite, und/oder ihrer zulässigen Achslast unterscheiden.

Dadurch können Schlepper mit unterschiedlichen Leistungen und/oder unterschiedlichen Spurbreiten erstellt werden, in denen die Batterie-Module die jeweils unterschiedlich angeordnet werden können.

Vorzugsweise umfasst der Baukasten als Baukastenteile
- wenigstens eine Sorte, vorzugsweise mehrere Sorten, von Chassis-Seitenteilen, die sich insbesondere hinsichtlich ihres Achsabstandes unterscheiden,
- wenigstens eine Sorte, vorzugsweise mehrere Sorten, von Chassis-Querteilen, die sich insbesondere hinsichtlich ihrer Länge in Querrichtung, also hinsichtlich der möglichen Spurbreite, unterscheiden und insbesondere auf die Spurbreiten der als Baukastenteile vorgehaltenen Achsen abgestimmt sind.

Hierdurch können unterschiedlich lange und unterschiedlich breite Schlepper hergestellt werden, in denen die Batterie-Module in unterschiedlichen Anordnungen positioniert werden können.

### c) Ausführungsbeispiele

Ausführungsformen gemäß der Erfindung sind im Folgenden beispielhaft näher beschrieben. Es zeigen:
- **Figur 1a:**: einen Schlepper in der Bauart als Langhauber in perspektivischer Darstellung,
- **Figur 1b:**: ein Batterie-Modul in perspektivischer Darstellung,
- **Figur 2a, b:**: in Seitenansicht zwei derartige, jedoch unterschiedlich lange, Schlepper,
- **Figur 3a, b:**: in der Ansicht von oben die zwei unterschiedlich langen Schlepper gemäß **Figur 2a****, b,**
- **Figur 4a, b:**: in der Heckansicht zwei derartige, jedoch unterschiedlich breite, Schlepper,
- **Figur 5a, b:**: in der Frontansicht die zwei unterschiedlich breiten Schlepper gemäß **Figur 4a****, b,**
- **Figuren 6a - d:**: unterschiedliche weitere Einbauvarianten der vorderen Batterie-Module an einem nur jeweils in der Aufsicht dargestellten Schlepper,
- **Figuren 7a - c:**: vereinfachte Darstellung weiterer Einbauvarianten der Batterie-Module in perspektivischer Ansicht.

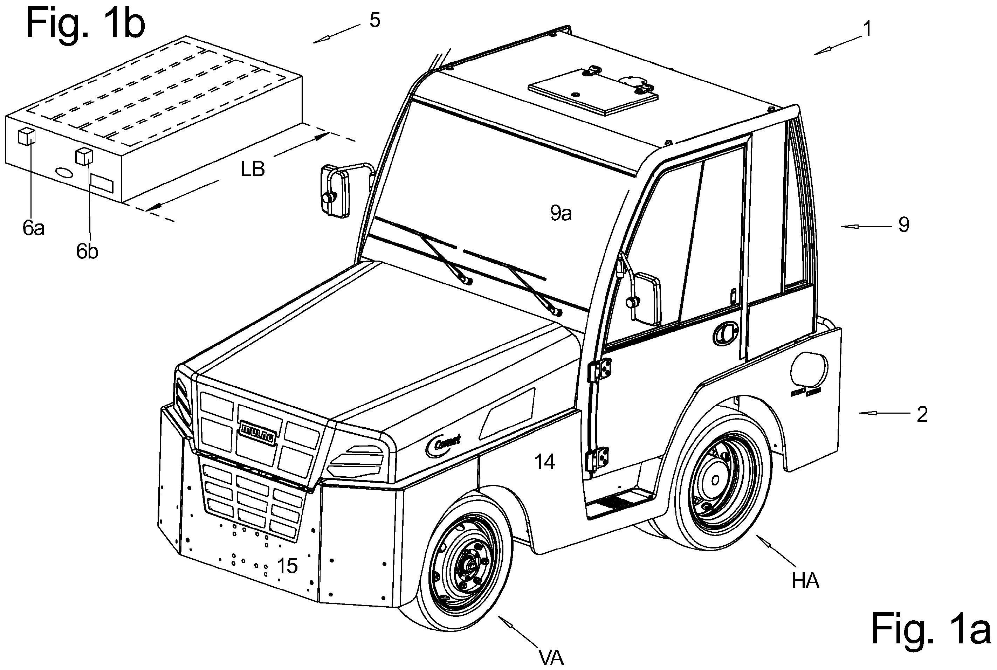

**Figur 1a** zeigt in perspektivischer Ansicht einen Schlepper in der Bauform als Langhauber, dessen Chassis also über die aufgesetzte Fahrerkabine nach vorne hinaus ein langes Vorderteil aufweist, jedoch über das hintere Ende der Fahrerkabine sehr wenig vorsteht.

In dem Chassis-Vorderteil ist bei Antrieb mit einem Verbrennungsmotor dieser unter der zu öffnenden Fronthaube angeordnet.

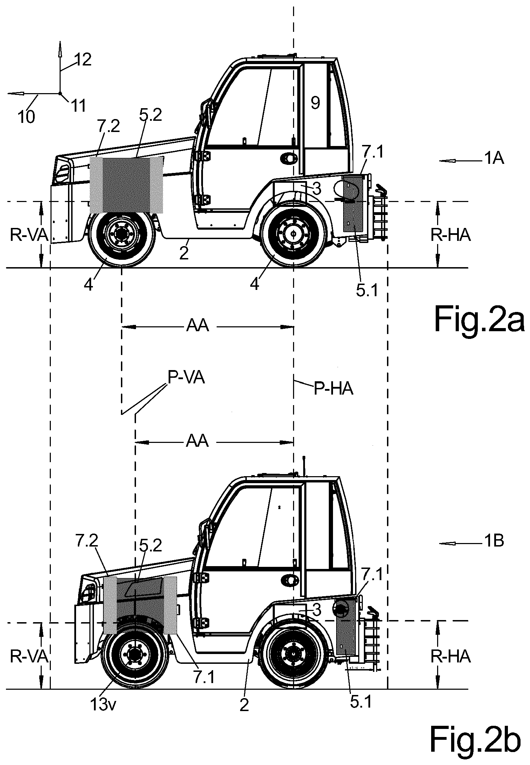

Der elektrische Motor befindet sich dabei - wie am besten **Figur 2a, 2b** zeigen - über der Hinterachse HA.

Dabei sitzt die Vorderachse VA in Längsrichtung 10 des Schleppers 1 gesehen unter dem Vorderteil des Chassis 2 und vollständig vor der Fahrerkabine 9, während die Hinterachse HA sich teilweise unter der Fahrerkabine 9 befindet.

Die Hinterachse kann doppelt bereift sein wie in **Figur 1a** dargestellt, oder einfach bereift.

**Figur 1b** zeigt ein typisches quaderförmiges Batterie-Modul 5, welches gegenüber seiner Dicke etwa doppelt so breit und etwa viermal so lang ist. Wie angedeutet, befinden sich darin beispielsweise in mehreren Lagen übereinander je etwa 100 oder mehr Batteriezellen, die in dem Batterie-Modul 5 bereits fertig verdrahtet und gegebenenfalls auch mit einer Flüssigkeitskühlung innerhalb des Batterie-Moduls ausgestattet sind.

In der kleinsten Seitenfläche, also der kurzen Schmalseite, des Batterie-Moduls 5 sind dessen Anschlüsse untergebracht, insbesondere die beiden elektrischen Anschlüsse 6a, 6b, aber gegebenenfalls auch Anschlüsse für die Flüssigkeitskühlung, und darüber hinaus gegebenenfalls Anzeigeelemente, Steuerungsanschlüsse, etc. Dabei ist es denkbar, dass die beiden elektrischen Anschlüsse 6a, 6b und gegebenenfalls Anzeigeelemente und/oder Steuerungsanschlüsse auf einer der beiden kleinsten Seitenflächen des Batterie-Moduls 5 angeordnet sind und die Anschlüsse für die Flüssigkeitskühlung auf der anderen der beiden kleinsten Seitenflächen des Batterie-Moduls 5 angeordnet sind. Alternativ können die beiden elektrischen Anschlüsse 6a, 6b sowie gegebenenfalls die Anzeigeelemente und/oder Steuerungsanschlüsse und die Anschlüsse für die Flüssigkeitskühlung auf einer gemeinsamen Seitenfläche der beiden kleinsten Seitenflächen des Batterie-Moduls 5 angeordnet sein.

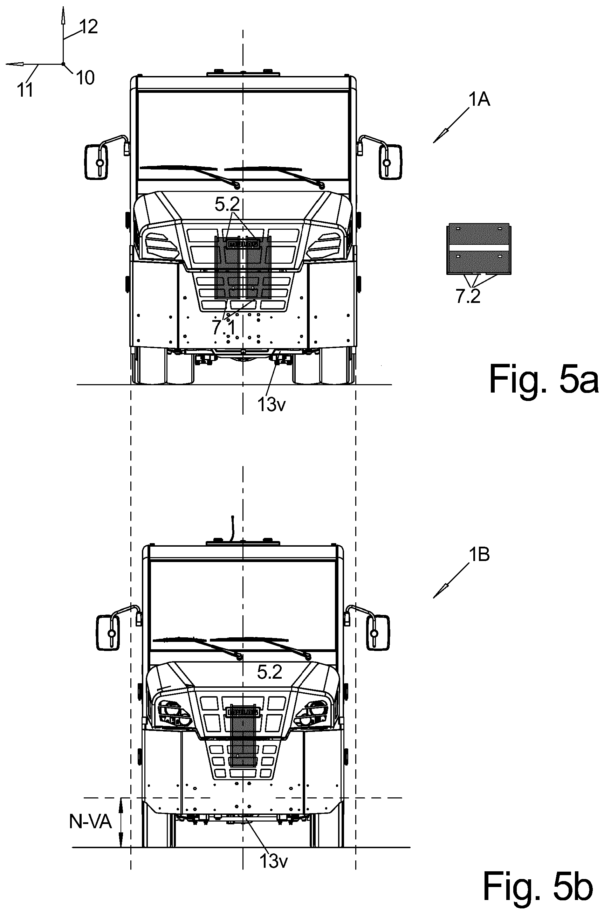

In den folgenden **Figuren 2a****, b bis 5a, b** ist in der einen Figur ein Schlepper 1A dargestellt, der länger und breiter ist als der in der jeweils anderen Figur dargestellte Schlepper 1B desselben Schlepper-Baureihe, und an denen die unterschiedlichen Unterbringungen der Batteriemodule 5 dargestellt sind.

Dabei ist allen gemeinsam, dass ein erstes, hinteres Batteriemodul 5.1 hochkant hinter der Hinterachse HA im Chassis 2 angeordnet ist, mit den elektrischen Anschlüssen 6a, b zur Seite weisend, also sich mit seiner Batterie-Länge LB in Querrichtung 11 des Schleppers 1 ausgerichtet.

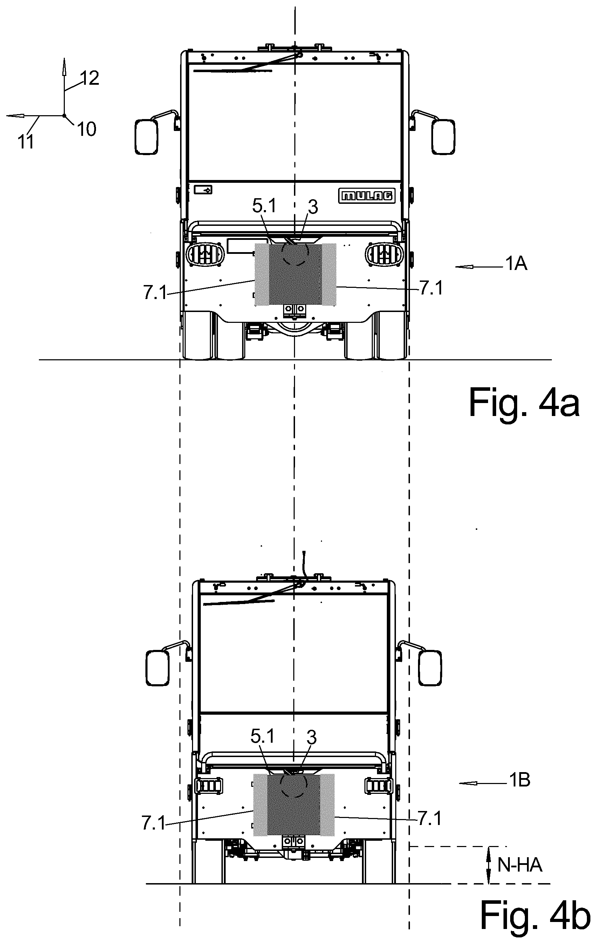

Wie die **Figuren 4a****, b** erkennen lassen, kann dieses hintere Batteriemodul 5.1 sehr tief angeordnet werden, also mit seiner Unterkante tiefer als beispielsweise der hintere Achskörper.

Wie die **Figuren 2a****, b** erkennen lassen, ist das vordere Batteriemodul 5.2 sowohl beim längeren Schlepper 1A, also beim kürzeren Schlepper 1B hochkant im Vorderteil des Chassis eingebaut, und zwar sich in Längsrichtung 10 über die Vorderachs-Position P-VA hinweg erstreckende, und in diesem Fall auch in einer solchen Höhe, dass es sich über den etwa auf Nabenhöhe durchgehenden Vorderachs-Körper 13v hinweg verläuft.

Dabei ist dieses vordere Batterie-Modul 5.2 hochkant liegend eingebaut, also mit seiner Batterie-Länge LB in Längsrichtung 10 des Schleppers verlaufend und mit den elektrischen Anschlüssen 6a, b nach hinten weisend. Die Anschlüsse für die Flüssigkeitskühlung können hingegen in Längsrichtung 10, d.h. in Fahrtrichtung, des Schleppers nach vorne weisen.

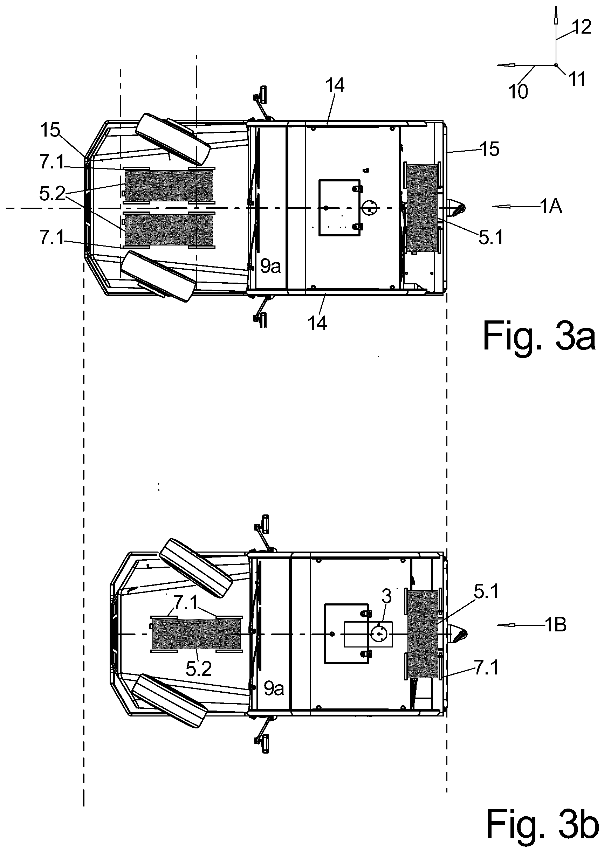

Wie die Aufsicht der **Figuren 3a****, b** zeigt, lässt es die größere Breite des Schleppers 1A jedoch zu, zwei vordere Batteriemodule 5.2 parallel in Querrichtung 11 nebeneinander anzuordnen, was die geringe Breite beim Schlepper 1B nicht zulässt, in dem nur ein einziges vorderes Batteriemodul 5.2, dann vorzugsweise auf der Längsmitte des Chassis 2, angeordnet ist.

In der Frontansicht der **Figuren 5a, 5b** ist bei dem breiteren Schlepper 1A daneben eine alternative Anordnung der beiden vorderen Batterie-Module. 5.2 flachliegend und mit Abstand übereinander dargestellt, was im schmaleren Schlepper 1B darunter wegen des benötigten Raumes in Querrichtung 11 für das Einschlagen der Vorderräder 4 nicht möglich ist.

Die **Figuren 5a****, b** lassen auch erkennen, dass gegenüber der dargestellten Einbaulage, in der sich der eine oder die beiden vorderen Batterie-Module 5.2 mit ihrer Unterkante oberhalb der Nabenhöhe N-VA der Vorderachse und insbesondere auch über dessen Achskörper 13v befinden.

Eine tiefere Einbaulage, bei welcher sich das eine oder die beiden vorderen Batterie-Module 5.2 mit ihrer Unterkante vorzugsweise unterhalb der Nabenhöhe N-VA der Vorderachse befinden, wäre möglich, wenn der Schlepper 1 keinen durchgehenden Achskörper 13v hätte, sondern eine gekröpfte Achse oder Einzel-Radaufhängung und dazwischen das wenigstens eine vordere Batterie-Modul 5.2 deutlich tiefer als dargestellt montiert werden könnte, was einen günstigeren Schwerpunkt ergibt.

In **Figur 2a****, b** sind die zum Fixieren der Batterie-Module 5 im Chassis 2 benötigten Batterie-Halter 7.1, 7.2 in zwei unterschiedlichen Bauformen dargestellt:
Dabei ist der Batterie-Halter 7.2 für das wenigstens eine hochkant angeordnete vordere Batterie-Modul 5.2 U-förmig oder L-Förmig gestaltet mit nach oben weisenden frei endenden Schenkeln, zwischen denen genau das Batterie-Modul 5.2 aufgenommen werden kann.

Der Batterie-Halter 7.1 für das hinter der Hinterachse hochkant angeordnete hintere Batterie-Modul 5.1 besteht im Wesentlichen aus einer Tragplatte, die an der Oberseite des Batterie-Moduls 5.1 einerseits und am Chassis 2 andererseits befestigt wird, sodass es sich um eine primär hängende Befestigung des Batterie-Moduls 5.1 handelt, welches zusätzlich zur Fixierung des unteren Endes des Batterie-Moduls 5.1 gegenüber dem Chassis befestigt ist, sein Gewicht wird jedoch primär hängend vom Chassis getragen.

In **Figur 5a****, b** sind ebenfalls die zum Fixieren der Batteriemodule 5 im Chassis 2 benötigten Batterie-Halter 7.1, 7.2 in zwei unterschiedlichen Bauformen dargestellt:
Dort sind sie in beiden Fällen U-förmig gestaltet mit nach oben weisenden frei endenden Schenkeln, zwischen denen ein Batterie-Modul aufgenommen werden kann.

Der Abstand ist bei den Batterie-Haltern 7.1 so bemessen, dass ein Batterie-Modul, hier 5.2, hochkant genau dazwischen passt. Außerhalb des Schleppers 1 ist dargestellt, dass der Batterie-Halter 7.2 - in der gestrichelten Bauform - so dimensioniert ist, dass ein Batteriemodul flachliegend dazwischen passt oder auch zwei flachliegende übereinander, was durch entsprechende Verlängerungsteile der frei endenden Schenkel nach oben erzielbar ist.

Am Beispiel der Batterie-Halter 7.2 ist jedoch auch dargestellt, dass diese statt U-förmig jeweils winkelförmig ausgebildet sein können und damit auf unterschiedliche Aufnahmebreiten, also ein hochkant stehendes oder ein flach liegendes, Batterie-Modul einstellbar sind.

In beiden Fällen besitzen meist die horizontal unten liegenden Schenkel eine Befestigungsvorrichtung zum Befestigen gegenüber dem Chassis 2, beispielsweise einer in Querrichtung 11 verlaufende Querstreben des Chassis 2.

Dabei kann es sich beispielsweise um Durchgangsöffnungen zum Hindurchstecken von Verschraubungen handeln, wobei dann vorzugsweise unterschiedliche Lochmuster für die einzelnen Schleppermodelle, hier 1A und 1B, vorhanden sind, denn auch die Querstrebe wird dann in unterschiedlichen Positionen Verschraubungs-Öffnungen aufweisen, für die wahlweise Positionierung einer der gegebenenfalls unterschiedlichen Arten von Batterie-Haltern 7.1, 7.2 oder desselben Batteriehalters an unterschiedlichen Querpositionen und/oder auch Längspositionen im Chassis 2 handeln.

Die Befestigung der Batterie-Module (5) am Chassis (2) kann auch eine Dämpfung, beispielsweise in Form von dazwischen gesetzten Gummielementen ähnlich einem Motorlager, enthalten.

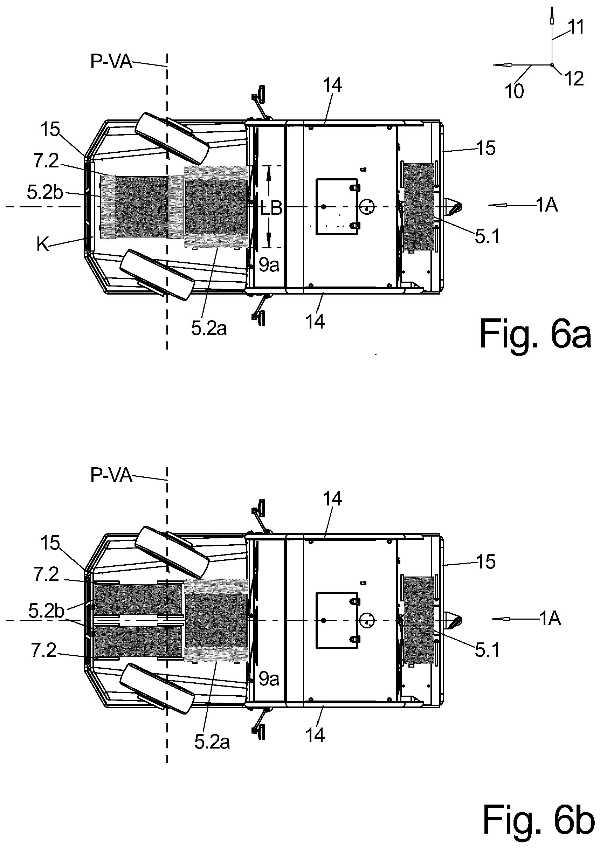

Die **Figuren 6a** **bis d** zeigen - jeweils nur in der Aufsicht und nur für ein einziges Schleppermodell, einen Langhauber, in einer einzigen Größe - weitere Anordnungen von mindestens zwei oder auch mehr vorderen Batterie-Modulen zusätzlich zu dem hinter der Hinterachse angeordneten hinteren Batterie-Modul 5.1.

In den **Figuren 6a, 6b** ist im hinteren Teil des Chassis-Vorderteils, also möglichst nahe der Fahrerkabine 9 und dadurch meist vollständig in der Aufsicht betrachtet hinter der Vorderachs-Position P-VA, ein erstes vorderes Batterie-Modul 5.2a flach liegend positioniert, vorzugsweise mit der größten Längserstreckung, der Batterielänge LB, in Querrichtung 11 des Schleppers 1 weisend.

Dadurch wird möglichst viel freier Abstand von diesem Batterie-Modul 5.2a zum vorderen Ende des Chassis 2 erzielt.

Damit ist es in den meisten Fällen möglich, vor diesem ersten vorderen Batterie-Modul 5.2a
- entweder gemäß **Figur 6a** ein zweites oder gar drittes vorderes Batterie-Modul 5.2b flach liegend
- oder gemäß **Figur 6b** hochkant anzuordnen,
vorzugsweise jeweils mit der Batterie-Länge LB in Längsrichtung 10 des Schleppers 1.

Wenn die Höhe ausreicht, können an dieser Position zwei flach liegende gemäß **Figur 6a** oder zwei hochkant angeordnete gemäß **Figur 6b** angeordnet werden, wodurch sich die Gesamtzahl der Batterie-Module auf vier erhöhen lässt.

Bei der Lösung gemäß **Figur 6a** können die beiden flach liegenden Batterie-Module 5.2a, b auch in Längsrichtung 10 überlappen, wenn sie auf unterschiedlicher Höhenlage positioniert werden können, vor allem dann, wenn der an vorderster Position nur ein einziges Batterie-Modul 5.2b vorhanden ist.

Bei der Lösung gemäß **Figur 6a** können die beiden flach liegenden Batterie-Module 5.2a, b auch mit ihrer Batterielänge LB in Längsrichtung 10 oder in Querrichtung 11 angeordnet sein.

Erfindungsgemäß erstreckt sich das vorderste Batterie-Modul 5.2b über die Vorderachs-Position P-VA hinweg, sodass das hintere 5.2a der beiden sich vollständig in der Aufsicht betrachtet innerhalb des Achsabstands befinden kann, was eine günstige Gewichtsverteilung bewirkt.

Wenn es sich dabei um Batterie-Module mit Flüssigkeitskühlung handelt, werden die weiter vorn liegenden Batterie-Module 5.2b dieser vorderen Batterie-Module 5.2 mit den Flüssigkeit-Anschlüssen nach vorne montiert, wodurch kurze Leitungswege zum in der Front des Chassis 2 angeordneten Kühlers K möglich sind.

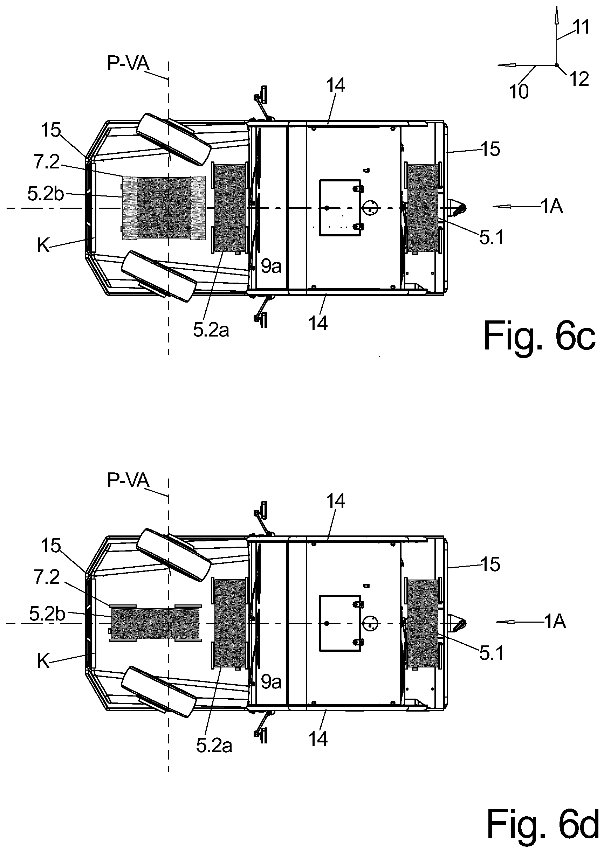

In den **Figuren 6c, 6d** ist im hinteren Teil des Chassis-Vorderteils, also möglichst nahe der Fahrerkabine 9 und dadurch meist vollständig in der Aufsicht betrachtet hinter der Vorderachs-Position P-VA ein erstes vorderes Batterie-Modul 5.2a hochkant positioniert, vorzugsweise mit der größten Längserstreckung, der Batterielänge LB, in Querrichtung 11 des Schleppers 1 weisend.

Dadurch wird möglichst viel freier Abstand von diesem Batterie-Modul 5.2a zum vorderen Ende des Chassis 2 erzielt.

Dadurch können erst recht, wie zu den **Figuren 6a****, b** beschrieben, vor diesem ersten vorderen Batterie-Modul 5.2a
- entweder gemäß **Figur 6c** ein zweites oder gar drittes vorderes Batterie-Modul 5.2b flach liegend
- oder gemäß **Figur 6d** hochkant angeordnet werden vorzugsweise jeweils mit der Batterie-Länge LB in Längsrichtung 10 des Schleppers 1.

Wenn die Höhe ausreicht, können auch hier an dieser Position zwei flach liegende Batterie-Module gemäß **Figur 6c** oder zwei hochkant angeordnete gemäß **Figur 6d** angeordnet werden, wodurch sich die Gesamtzahl der Batterie-Module auf vier erhöhen lässt.

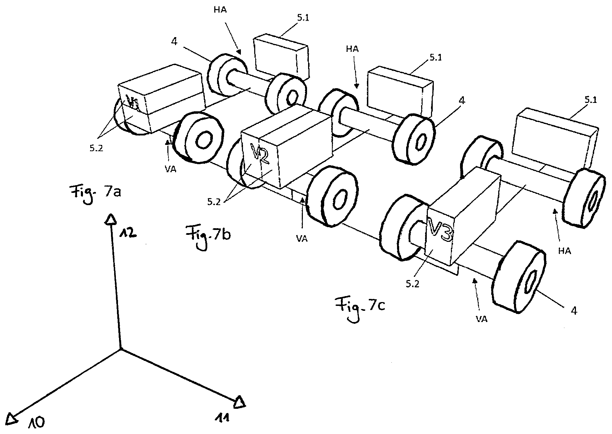

Die **Figuren 7a-c**zeigen drei weitere Ausführungsbeispiele der Erfindung, wobei jeweils ein Schlepper in vereinfachter Weise durch die Achsen VA, HA und Reifen 4 in perspektivischer Ansicht dargestellt ist. Dabei sind in allen drei Ausführungsbeispielen das hintere Batterie-Modul 5.1 hochkant liegend mit seiner längsten Erstreckungsrichtung in Querrichtung 11 und vorzugsweise hinter der Hinterachs-Position des Fahrzeugs angeordnet. Mindestens ein weiteres Batterie-Modul 5.2 ist in jedem der Ausführungsbeispiele vor der Hinterachs-Position, vorzugsweise im Bereich der Vorderachsposition, angeordnet. Die Ausführungsbeispiele unterscheiden sich in der Anordnung der vorderen Batterie-Module 5.2.

Im Ausführungsbeispiel gemäß **Figur 7a** befinden sich zwei vordere Batterie-Module 5.2 flachliegend oberhalb der Vorderachs-Position parallel übereinander, mit ihrer längsten Erstreckungsseite (Batterie-Länge) in Längsrichtung 10 des Fahrzeugs angeordnet.

Im Ausführungsbeispiel gemäß **Figur 7b** hingegen sind die zwei vorderen Batterie-Module 5.2 oberhalb der Vorderachsposition hochkant liegend und parallel zueinander mit ihrer längsten Erstreckungsseite (Batterie-Länge) in Längsrichtung 10 des Fahrzeugs angeordnet.

Im Ausführungsbeispiel gemäß **Figur 7c** ist ein einzelnes vorderes Batterie-Modul 5.2 oberhalb der Vorderachsposition hochkant liegend und mit seiner längsten Erstreckungsseite (Batterie-Länge) in Längsrichtung 10 des Fahrzeugs positioniert.

### BEZUGSZEICHENLISTE

- 1: Schlepper
- 2: Chassis
- 3: Fahr-Motor
- 4: Rad
- 5.1: hinteres Batterie-Modul
- 5.2: vorderes Batterie-Modul
- 6: elektrischer Anschluss
- 7: Modul-Halter
- 8: Chassis-Vorderteil, Fronthaube
- 9: Fahrerkabine
- 9a: Frontscheibe
- 10: Längsrichtung Schlepper
- 11: horizontale Querrichtung
- 12: Vertikale
- 13: Achskörper
- 14: Chassis-Seitenteil
- 15: Chassis-Querteil

- LB: Batterie-Länge
- AA: Achsabstand
- K: Kühler
- N-VA: Nabenhöhe Vorderachse
- N-HA: Nabenhöhe Hinterachse
- R-VA: Radhöhe Vorderachse
- R-HA: Radhöhe Hinterachse
- VA: Vorderachse
- HA: Hinterachse

## Patentansprüche

1. Batterie-elektrischer Schlepper (1), insbesondere zum Einsatz auf dem Flughafen-Vorfeld oder im Logistik-Bereich, mit
- einem Chassis (2), an dem zwei Achsen (VA, HA) befestigt sind,
- wenigstens einem elektrischen Fahr-Motor (3),
- wenigstens zwei Batterie-Modulen (5.1, 5.2),
wobei
wenigstens ein vorderes Batterie-Modul (5.2) vor der Hinterachs-Position (P-HA) sowie in Schlepper-Längsrichtung (10) über die Vorderachs-Position (P-VA) innerhalb des Chassis (2) hinweg erstreckend angeordnet ist, **dadurch gekennzeichnet, dass** wenigstens ein hinteres Batterie-Modul (5.1) hinter der Hinterachs-Position (P-HA) angeordnet ist.

2. Schlepper nach Anspruch 1,
**dadurch gekennzeichnet, dass**
- der Schlepper (1) als Langhauber ausgebildet ist und ein mindestens 60 cm langes Chassis-Vorderteil vor der Frontscheibe (9a) der Fahrerkabine (9) aufweist und/oder
- die Batterie-Module (5.1, 5.2) so angeordnet sind, dass die Achslast-Verteilung zwischen 30 % und 50 %, besser zwischen 35 % und 45 %, besser zwischen 38 % und 42 % auf der Vorderachse und/oder zwischen 50 % und 70 %, besser zwischen 55 % und 65 %, besser zwischen 58 % und 62 %, auf der Hinterachse beträgt.

3. Schlepper nach einem der vorhergehenden Ansprüche,
**dadurch gekennzeichnet, dass**
- der elektrische Fahr-Motor (3) über der angetriebenen Hinterachse (HA), insbesondere dem Hinterachs-Körper angeordnet ist
- insbesondere maximal 40 cm, besser maximal 20 cm, besser maximal 15 cm, besser maximal 10 cm, besser maximal nur 5 cm, besser überhaupt nicht in der Aufsicht betrachtet nach hinten über den Hinterachs-Körper vorsteht,
- insbesondere eine untersetzende Wirkverbindung zwischen der Motor-Abtriebswelle und der angetriebenen Hinterachse, insbesondere deren Differential, in Fahrtrichtung (10) vor dem Rest des Hinterachse-Körpers angeordnet ist,
- insbesondere der Wechselrichter im Achsabstand (AA) in dessen hinterer Hälfte angeordnet ist.

4. Schlepper nach einem der vorhergehenden Ansprüche,
wobei insbesondere die Batteriemodule quaderförmig sind mit unterschiedlichen Erstreckungen in ihren drei Kantenrichtungen **dadurch gekennzeichnet, dass** das hintere Batteriemodul (5.1) hochkant liegend oder hochkant stehend mit seiner Batterie-Länge (LB) oder Batterie-Breite in Querrichtung (11) des Schleppers verlaufend, angeordnet ist.

5. Schlepper nach einem der vorhergehenden Ansprüche,
**dadurch gekennzeichnet, dass** das wenigstens eine vordere Batterie-Modul (5.2) oberhalb der Rotationsachse oder der Nabenhöhe (N-VA, N-HA), insbesondere oberhalb eines in Querrichtung (11) durchgehenden oder gekröpften Achskörpers (13), der entsprechenden Achse, angeordnet ist.

6. Schlepper nach einem der vorhergehenden Ansprüche,
**dadurch gekennzeichnet, dass**
- das über der Vorderachs-Position (P-VA) positionierte vordere Batterie-Modul (5.2) mit seiner größten Erstreckungsrichtung, seiner Batterie-Länge (LB), in Schlepper-Längsrichtung (10) oder unter Abweichung von maximal 30°, besser maximal 20°, besser maximal 10° von der Schlepper-Längsrichtung, (10) angeordnet ist, oder/und
- wenigstens ein vorderes Batterie-Modul (5.2), insbesondere bei Längs-Einbau, sich zu mindestens 40 %, besser mindestens 50 %, besser mindestens 60 % seiner Erstreckung in Längsrichtung (10) in der Aufsicht betrachtet in dem Bereich zwischen den Achs-Positionen (P-VA, P-HA), also innerhalb des Achsabstandes (AA), befindet,
- insbesondere der Rest seiner Erstreckung in Längsrichtung (10) vor der Vorderachs-Position (P-VA) angeordnet ist.

7. Schlepper nach einem der vorhergehenden Ansprüche,
**dadurch gekennzeichnet, dass**
- wenigstens zwei vordere Batterie-Module (5.2), insbesondere parallel nebeneinander, mit ihrer größten Erstreckungsrichtung (LB) sich in Schlepper-Längsrichtung (10) über eine der Achs-Positionen (P-VA, P-HA) hinweg erstreckend, insbesondere über die Vorderachs-Position (P-VA) innerhalb des Chassis (2) hinweg erstreckend, angeordnet sind, wobei vorzugsweise auf der entsprechenden Achse die Räder (4) eine Einzelrad-Aufhängung besitzen oder die entsprechende Achse als gekröpfte Starrachse ausgebildet ist,
- insbesondere diese wenigstens zwei Batterie-Module (5.2) hochkant, insbesondere hochkant liegend, in Längsrichtung (10), angeordnet sind,
- insbesondere diese wenigstens zwei Batterie-Module (5.2) oberhalb der Rotationsachse oder der Nabenhöhe (N-VA, N-HA), insbesondere oberhalb eines in Querrichtung durchgehenden Achskörpers (13) der entsprechenden Achse angeordnet ist.

8. Schlepper nach einem der vorhergehenden Ansprüche,
**dadurch gekennzeichnet, dass**
- wenigstens zwei vordere Batterie-Module (5.2), insbesondere parallel zueinander, sich in Schlepper-Längsrichtung (10) über eine der Achs-Positionen (P-VA, P-HA) hinweg erstreckend, insbesondere über die Vorderachs-Position (P-VA) innerhalb des Chassis (2) hinweg erstreckend, angeordnet sind,
- insbesondere diese wenigstens zwei Batterie-Module (5.2) flach liegend, insbesondere mit ihrer größten Erstreckungsrichtung (LB) in Querrichtung (11) verlaufend, angeordnet sind,
- insbesondere von diesen wenigstens zwei Batterie-Modulen (5.2) wenigstens eines oberhalb der Rotationsache oder der Nabenhöhe (N-VA, N-HA) der entsprechenden Achse angeordnet ist.

9. Schlepper nach einem der vorhergehenden Ansprüche,
**dadurch gekennzeichnet, dass**
- wenigstens zwei vordere Batterie-Module (5.2) parallel übereinander, sich in Schlepperlängsrichtung (10) insbesondere über die Vorderachs-Position (P-VA) innerhalb des Chassis (2) hinweg erstreckend angeordnet sind,
- insbesondere diese wenigstens zwei Batterie-Module (5.2) flachliegend und mit Abstand übereinandergestellt, insbesondere mit ihrer größten Erstreckungsrichtung (LB) in Längsrichtung (10) verlaufend, angeordnet sind,
- insbesondere von diesen wenigstens zwei Batterie-Modulen (5.2) wenigstens eines mit seiner Unterkante oberhalb der Rotationsache oder der Nabenhöhe (N-VA) der Vorderachse angeordnet ist.

10. Schlepper nach einem der vorhergehenden Ansprüche,
**dadurch gekennzeichnet, dass** von wenigstens zwei vorderen Batterie-Modulen (5.2),
- das davon weiter hinten befindliche Batterie-Modul (5.2a) entweder flach liegend, insbesondere mit seiner größten Erstreckungsrichtung (LB) in Querrichtung (11) verlaufend, angeordnet ist, oder hochkant, insbesondere mit seiner größten Erstreckungsrichtung (LB) in Querrichtung (11) verlaufend, angeordnet ist,
- das davon weiter vorne befindliche Batterie-Modul (5.2b) entweder hochkant, insbesondere mit seiner größten Erstreckungsrichtung (LB) in Längsrichtung (10) verlaufend, angeordnet ist, oder flach liegend, insbesondere mit seiner größten Erstreckungsrichtung (LB) in Längsrichtung (10) verlaufend, angeordnet ist,
- insbesondere oberhalb der Rotationsachse oder der Nabenhöhe (N-VA) der entsprechenden Achse angeordnet ist.

11. Schlepper nach einem der vorhergehenden Ansprüche,
**dadurch gekennzeichnet, dass**
- wenigstens ein vorderes Batterie-Modul (5.2) zwischen den Achsen angeordnet ist, insbesondere liegend teilweise unter der Fahrerkabine (9) und vor der Vorderachse (VA) angeordnet ist.

12. Baukasten zum Herstellen eines Batterie-elektrischen Schleppers (1) nach einem der vorhergehenden Ansprüche,
**dadurch gekennzeichnet, dass** als Baukastenteile vorhanden sind
- wenigstens eine Sorte von Batterie-Modulen (5),
- wenigstens eine Sorte von Modul-Haltern (7.1),
- wenigstens eine Sorte von Fahr-Motoren (3).

13. Baukasten nach Anspruch 12,
**dadurch gekennzeichnet, dass** als Baukastenteile vorhanden sind
- eine Sorte von Modul-Haltern (7.2) zum Befestigen eines Batteriemoduls (5) nur flach liegend am Chassis (2),
- eine Sorte von Modul-Haltern (7.1) zum Befestigen eines Batteriemoduls (5) nur aufrecht, insbesondere aufrecht liegend, insbesondere stehend bzw. hängend, am Chassis (2).

14. Baukasten nach einem der vorhergehenden Baukasten-Ansprüche,
**dadurch gekennzeichnet, dass** als Baukastenteile vorhanden sind
- mehrere Sorten von Fahr-Motoren (3), die sich insbesondere hinsichtlich ihrer Dauerleistung unterscheiden,
- mehrere Sorten von Vorderachsen (VA) und/oder Hinterachsen (AA), die sich insbesondere hinsichtlich ihres Radabstandes und/oder ihrer zulässigen Achslast unterscheiden.

15. Baukasten nach einem der vorhergehenden Baukasten-Ansprüche,
**dadurch gekennzeichnet, dass** als Baukastenteile vorhanden sind
- wenigstens eine, vorzugsweise mehrere Sorten von Chassis-Seitenteilen (14), die sich insbesondere hinsichtlich ihres Achsabstandes (AA) unterscheiden und/oder
- wenigstens eine, vorzugsweise mehrere Sorten von Chassis-Querteilen (15), die sich insbesondere hinsichtlich ihrer Länge in Querrichtung, also hinsichtlich der möglichen Spurbreite, unterscheiden.

## Claims

1. A battery electric tractor (1), in particular for use on the airport apron or in the logistics sector, comprising:
- a chassis (2) to which two axles (VA, HA) are fastened,
- at least one electric traction motor (3),
- at least two battery modules (5.1, 5.2),
wherein at least one front battery module (5.2) is arranged in front of the rear axle position (P-HA) and extending in the tractor longitudinal direction (10) over the front axle position (P-VA) within the chassis (2), **characterized in that** at least one rear battery module (5.1) is arranged behind the rear-axle position (P-HA).

2. The tractor according to claim 1,
**characterized in that**
- the tractor (1) is designed as a long cab and has a chassis front part which is at least 60 cm long in front of the windshield (9a) of the driver's cab (9), and/or
- the battery modules (5.1, 5.2) are arranged such that the axle load distribution is between 30% and 50%, better between 35% and 45%, better between 38% and 42% on the front axle and/or between 50% and 70%, better between 55% and 65%, better between 58% and 62%, on the rear axle.

3. The tractor according to any of the preceding claims,
**characterized in that**
- the electric traction motor (3) is arranged above the driven rear axle (HA), in particular the rear axle beam:
- in particular, projects a maximum of 40 cm, better a maximum of 20 cm, better a maximum of 15 cm, better a maximum of 10 cm, a maximum of only 5 cm, better not at all rearward beyond the rear axle body in plan view,
- in particular a reducing active connection is arranged between the motor output shaft and the driven rear axle, in particular its differential, in the direction of travel (10) in front of the rest of the rear axle beam,
- in particular, the inverter is arranged within the axle spacing (AA) in its rear half.

4. The tractor according to any of the preceding claims,
wherein in particular the battery modules are cuboid with different extensions in their three edge directions,
**characterized in that** the rear battery module (5.1) is arranged lying on edge or standing on edge with its battery length (LB) or battery width extending in the transverse direction (11) of the tractor.

5. The tractor according to any of the preceding claims,
**characterized in that** the at least one front battery module (5.2) is arranged above the axis of rotation or the hub height (N-VA, NHA), in particular above a continuous or cranked axle beam (13) in the transverse direction (11), of the corresponding axle.

6. The tractor according to any of the preceding claims,
**characterized in that**
- the front battery module (5.2) positioned above the front axle position (P-VA) is arranged with its greatest direction of extension, its battery length (LB), in the longitudinal direction of the tractor (10) or at a deviation of a maximum of 30°, better a maximum of 20°, better a maximum of 10° from the longitudinal direction of the tractor (10), or/and
- at least one front battery module (5.2), in particular in the case of longitudinal installation, is located for at least 40%, preferably at least 50%, preferably at least 60% of its extension in the longitudinal direction (10), viewed in plan view, in the region between the axle positions (P-VA, P-HA), i.e. within the axle spacing (AA),
- in particular, the rest of its extension in the longitudinal direction (10) is arranged upstream from the front axle position (P-VA).

7. The tractor according to any of the preceding claims,
**characterized in that**
- at least two front battery modules (5.2), in particular parallel next to one another, are arranged with their greatest direction of extension (LB) extending in the longitudinal direction (10) of the tractor over one of the axle positions (P-VA, P-HA), in particular extending over the front axle position (P-VA) within the chassis (2), wherein the wheels (4) preferably have an independent wheel suspension on the corresponding axle, or the corresponding axle is designed as a cranked rigid axle,
- in particular these at least two battery modules (5.2) are arranged on edge, in particular lying on edge, in the longitudinal direction (10),
- in particular, these at least two battery modules (5.2) are arranged above the axis of rotation or the hub height (N-VA, NHA), in particular above an axial body (13) of the corresponding axle which is continuous in the transverse direction.

8. The tractor according to any of the preceding claims,
**characterized in that**
- at least two front battery modules (5.2), in particular parallel to one another, are arranged extending in the longitudinal direction (10) of the tractor over one of the axle positions (P-VA, P-HA), in particular extending over the front axle position (P-VA) within the chassis (2),
- in particular, these at least two battery modules (5.2) are arranged lying flat, in particular running with their greatest extension direction (LB) in the transverse direction (11),
- in particular of these at least two battery modules (5.2), at least one is arranged above the axis of rotation or the hub height (N-VA, N-HA) of the corresponding axis.

9. The tractor according to any of the preceding claims,
**characterized in that**
- at least two front battery modules (5.2) are arranged parallel one above the other, extending in particular over the front axle position (P-VA) within the chassis (2) in the longitudinal direction of the tractor (10),
- in particular these at least two battery modules (5.2) are arranged lying flat and spaced apart one above the other, in particular with their greatest direction of extension (LB) running in the longitudinal direction (10),
- in particular of these at least two battery modules (5.2), at least one is arranged with its lower edge above the rotation axis or the hub height (N-VA) of the front axle.

10. The tractor according to any of the preceding claims,
**characterized in that**, of at least two front battery modules (5.2),
- the battery module (5.2a) located further to the rear is either arranged lying flat, in particular with its greatest direction of extension (LB) running in the transverse direction (11), or is arranged on edge, in particular with its greatest direction of extension (LB) running in the transverse direction (11),
- the battery module (5.2b) located further to the front is either arranged on edge, in particular with its greatest direction of extension (LB) running in the longitudinal direction (10), or lying flat, in particular with its greatest direction of extension (LB) running in the longitudinal direction (10),
- in particular above the axis of rotation or the hub height (N-VA) of the corresponding axle.

11. The tractor according to any of the preceding claims,
**characterized in that**
- at least one front battery module (5.2) is arranged between the axles, in particular lying partially under the driver's cab (9) and in front of the front axle (VA).

12. A modular system for producing a battery electric tractor (1) according to any of the preceding claims,
**characterized in that** the following are available as modular components:
- at least one type of battery module (5),
- at least one type of module holder (7.1),
- at least one type of traction motor (3).

13. The modular system according to claim 12,
**characterized in that** the following are available as modular components:
- a type of module holder (7.2) for fastening a battery module (5) only lying flat to the chassis (2),
- a type of module holder (7.1) for fastening a battery module (5) only upright to the chassis (2) in particular lying upright, in particular standing or suspended.

14. The modular system according to any of the preceding modular system claims,
**characterized in that** the following are available as modular components:
- a plurality of types of traction motors (3) which differ in particular with regard to their continuous power,
- a plurality of types of front axles (VA) and/or rear axles (AA) which differ in particular with regard to their wheel spacing and/or their permissible axle load.

15. The modular system according to any of the preceding modular system claims,
**characterized in that** the following are available as modular components:
- at least one, preferably a plurality of types, of chassis side parts (14) which differ in particular with regard to their axle spacing (AA) and/or
- at least one, preferably several types of chassis cross members (15), which differ in particular with regard to their length in the transverse direction, i.e. with regard to the possible track width.

## Revendications

1. Tracteur électrique à batterie (1), en particulier pour une utilisation sur l'aire de trafic d'un aéroport ou dans le domaine de la logistique, comprenant
• un châssis (2) auquel deux essieux (VA, HA) sont fixés,
• au moins un moteur de traction électrique (3),
• au moins deux modules de batterie (5.1, 5.2),
wobei au moins un module de batterie avant (5.2) est disposé à l'avant de la position d'essieu arrière (P-HA) et s'étendant dans la direction longitudinale du tracteur (10) au-delà de la position d'essieu avant (P-VA) à l'intérieur du châssis (2), et
**caractérisé en ce qu'**au moins un module de batterie arrière (5.1) est disposé à l'arrière de la position d'essieu arrière (P-HA).

2. Tracteur selon la revendication 1,
**caractérisé en ce que**
• le tracteur (1) est configuré comme un tracteur à capot long et présente une partie avant de châssis d'une longueur d'au moins 60 cm à l'avant du pare-brise (9a) de la cabine de conduite (9) et/ou
• les modules de batterie (5.1, 5.2) sont disposés de telle sorte que la répartition de charge par essieu est comprise entre 30 % et 50 %, de préférence entre 35 % et 45 %, de préférence entre 38 % et 42 % sur l'essieu avant et/ou entre 50 % et 70 %, de préférence entre 55 % et 65 %, de préférence entre 58 % et 62 %, sur l'essieu arrière.

3. Tracteur selon l'une des revendications précédentes,
**caractérisé en ce que**
• le moteur de traction électrique (3) est disposé au-dessus de l'essieu arrière entraîné (HA), en particulier du corps d'essieu arrière,
• en particulier dépasse, vu en vue de dessus, vers l'arrière au-delà du corps d'essieu arrière de maximum 40 cm, de préférence de maximum 20 cm, de préférence de maximum 15 cm, de préférence de maximum 10 cm, de préférence de maximum 5 cm, de préférence ne dépasse pas du tout,
• en particulier une liaison fonctionnelle de réduction entre l'arbre de sortie de moteur et l'essieu arrière entraîné, en particulier son différentiel, est disposée dans la direction de déplacement (10) à l'avant du reste du corps d'essieu arrière,
• en particulier l'onduleur est disposé dans la moitié arrière de l'empattement (AA).

4. Tracteur selon l'une des revendications précédentes, dans lequel en particulier les modules de batterie sont de forme parallélépipédique avec des extensions différentes dans leurs trois directions d'arêtes,
**caractérisé en ce que** le module de batterie arrière (5.1) est disposé posé sur chant horizontalement ou posé sur chant verticalement, sa longueur de batterie (LB) ou sa largeur de batterie s'étendant dans la direction transversale (11) du tracteur.

5. Tracteur selon l'une des revendications précédentes,
**caractérisé en ce que** l'au moins un module de batterie avant (5.2) est disposé au-dessus de l'axe de rotation ou de la hauteur de moyeu (N-VA, N-HA), en particulier au-dessus d'un corps d'essieu (13) de l'essieu correspondant continu ou coudé dans la direction transversale (11).

6. Tracteur selon l'une des revendications précédentes,
**caractérisé en ce que**
• le module de batterie avant (5.2) positionné au-dessus de la position d'essieu avant (P-VA) est disposé avec sa direction de plus grande extension, sa longueur de batterie (LB), dans la direction longitudinale du tracteur (10) ou avec un écart de maximum 30°, de préférence de maximum 20°, de préférence de maximum 10° par rapport à la direction longitudinale du tracteur (10), et/ou
• au moins un module de batterie avant (5.2), en particulier dans le cas d'une installation longitudinale, vu en vue de dessus, se situe à hauteur d'au moins 40 %, de préférence d'au moins 50 %, de préférence d'au moins 60 % de son extension dans la direction longitudinale (10) dans la zone entre les positions d'essieu (P-VA, P-HA), c'est-à-dire à l'intérieur de l'empattement (AA),
• en particulier le reste de son extension dans la direction longitudinale (10) est disposé à l'avant de la position d'essieu avant (P-VA).

7. Tracteur selon l'une des revendications précédentes,
**caractérisé en ce que**
• au moins deux modules de batterie avant (5.2), en particulier parallèles l'un à côté de l'autre, sont disposés avec leur direction de plus grande extension (LB) s'étendant dans la direction longitudinale du tracteur (10) au-delà de l'une des positions d'essieu (P-VA, P-HA), en particulier au-delà de la position d'essieu avant (P-VA) à l'intérieur du châssis (2), dans lequel de préférence sur l'essieu correspondant les roues (4) possèdent une suspension à roues indépendantes ou l'essieu correspondant est configuré sous forme d'essieu rigide coudé,
• en particulier ces au moins deux modules de batterie (5.2) sont disposés sur chant, en particulier posés sur chant horizontalement, dans la direction longitudinale (10),
• en particulier ces au moins deux modules de batterie (5.2) sont disposés au-dessus de l'axe de rotation ou de la hauteur de moyeu (N-VA, N-HA), en particulier au-dessus d'un corps d'essieu (13) de l'essieu correspondant continu dans la direction transversale.

8. Tracteur selon l'une des revendications précédentes,
**caractérisé en ce que**
• au moins deux modules de batterie avant (5.2), en particulier parallèles entre eux, sont disposés s'étendant dans la direction longitudinale du tracteur (10) au-delà de l'une des positions d'essieu (P-VA, P-HA), en particulier au-delà de la position d'essieu avant (P-VA) à l'intérieur du châssis (2),
• en particulier ces au moins deux modules de batterie (5.2) sont disposés posés à plat, en particulier avec leur direction de plus grande extension (LB) s'étendant dans la direction transversale (11),
• en particulier, parmi ces au moins deux modules de batterie (5.2), au moins un est disposé au-dessus de l'axe de rotation ou de la hauteur de moyeu (N-VA, N-HA) de l'essieu correspondant.

9. Tracteur selon l'une des revendications précédentes,
**caractérisé en ce que**
• au moins deux modules de batterie avant (5.2) sont disposés parallèles l'un au-dessus de l'autre, s'étendant dans la direction longitudinale du tracteur (10) en particulier au-delà de la position d'essieu avant (P-VA) à l'intérieur du châssis (2),
• en particulier ces au moins deux modules de batterie (5.2) sont disposés posés à plat et superposés à distance, en particulier avec leur direction de plus grande extension (LB) s'étendant dans la direction longitudinale (10),
• en particulier, parmi ces au moins deux modules de batterie (5.2), au moins un est disposé avec son bord inférieur au-dessus de l'axe de rotation ou de la hauteur de moyeu (N-VA) de l'essieu avant.

10. Tracteur selon l'une des revendications précédentes,
**caractérisé en ce que**, parmi au moins deux modules de batterie avant (5.2),
• le module de batterie (5.2a) situé plus en arrière de ceux-ci est disposé soit posé à plat, en particulier avec sa direction de plus grande extension (LB) s'étendant dans la direction transversale (11), soit sur chant, en particulier avec sa direction de plus grande extension (LB) s'étendant dans la direction transversale (11),
• le module de batterie (5.2b) situé plus en avant de ceux-ci est disposé soit sur chant, en particulier avec sa direction de plus grande extension (LB) s'étendant dans la direction longitudinale (10), soit posé à plat, en particulier avec sa direction de plus grande extension (LB) s'étendant dans la direction longitudinale (10),
• en particulier est disposé au-dessus de l'axe de rotation ou de la hauteur de moyeu (N-VA) de l'essieu correspondant.

11. Tracteur selon l'une des revendications précédentes,
**caractérisé en ce que**
• au moins un module de batterie avant (5.2) est disposé entre les essieux, en particulier posé partiellement sous la cabine de conduite (9) et à l'avant de l'essieu avant (VA).

12. Kit pour la fabrication d'un tracteur électrique à batterie (1) selon l'une des revendications précédentes,
**caractérisé en ce que** sont prévus comme pièces du kit
• au moins un type de modules de batterie (5),
• au moins un type de supports de module (7.1),
• au moins un type de moteurs de traction (3).

13. Kit selon la revendication 12,
**caractérisé en ce que** sont prévus comme pièces du kit
• un type de supports de module (7.2) pour la fixation d'un module de batterie (5) uniquement posé à plat sur le châssis (2),
• un type de supports de module (7.1) pour la fixation d'un module de batterie (5) uniquement vertical, en particulier disposé debout, en particulier debout ou suspendu, sur le châssis (2).

14. Kit selon l'une des revendications de kit précédentes,
**caractérisé en ce que** sont prévus comme pièces du kit
• plusieurs types de moteurs de traction (3), qui se distinguent en particulier par leur puissance continue,
et/ou
• plusieurs types d'essieux avant (VA) et/ou d'essieux arrière, qui se distinguent en particulier par leur écartement de roues, c'est-à-dire la voie, et/ou par leur charge par essieu admissible.

15. Kit selon l'une des revendications de kit précédentes,
**caractérisé en ce que** sont prévus comme pièces du kit
• au moins un, de préférence plusieurs types de parties latérales de châssis (14), qui se distinguent en particulier par leur empattement (AA), et/ou
• au moins un, de préférence plusieurs types de traverses de châssis (15), qui se distinguent en particulier par leur longueur dans la direction transversale, c'est-à-dire par la voie possible, et sont en particulier adaptés aux voies des essieux prévus comme pièces de kit.
